# EUROPEAN PATENT SPECIFICATION

(11) **EP 3 476 017 B1**
(45) Date of publication and mention of the grant of the patent: **21.08.2024**
(21) Application number: 17732133.8
(22) Date of filing: 23.06.2017
(51) Int. Cl.: H02G 3/04, B61D 17/08

(54) **CABLE TRAY ASSEMBLY FOR A VEHICLE BODY OF A RAIL VEHICLE AND ITS METHOD OF ASSEMBLY**
KABELTRASSENANORDNUNG FÜR EINE KAROSSERIE EINES SCHIENENFAHRZEUGS UND VERFAHREN ZUR MONTAGE DAVON
ENSEMBLE DE CHEMIN DE CÂBLES SERVANT À UN CORPS DE VÉHICULE D'UN VÉHICULE FERROVIAIRE ET SON PROCÉDÉ D'ASSEMBLAGE

(30) Priority: 27.06.2016 GB 201611101
(43) Date of publication of application: 01.05.2019
(73) Proprietor: ALSTOM Holdings, 93400 Saint-Ouen-sur-Seine (FR)
(72) Inventor: BODDINGTON, Paul, Derby Derbyshire DE23 6TR (GB); TAYLOR, Jamie, Derby Derbyshire DE24 9EP (GB)
(74) Representative: Alatis
(86) International application number: PCT/EP2017/065531
(87) International publication number: WO 2018/001890

(56) References cited:
- EP-A2- 0 091 255
- EP-A2- 1 775 813
- WO-A1-2014/165904
- DE-A1- 102014 118 242
- KR-B1- 100 724 754
- US-A1- 2002 033 268
- US-B1- 6 664 467

## Description

### TECHNICAL FIELD OF THE INVENTION

The present invention relates to cable trays in rail vehicles.

### BACKGROUND ART

The installation of cables and electrical equipment in vehicle bodies of rail vehicles is a lengthy process. Once the cables and electrical equipment have been installed, it is often difficult to access the cabling or electrical equipment for maintenance or modifications. In particular, it is particularly difficult to change the location of a piece of electrical equipment or to add a piece of electrical equipment at a new location. DE102014118242 discloses a cable channel device for a rail vehicle.

A cable tray assembly for installing one or more cable harnesses, disclosed in US2002033268, comprises a main tray having at least a first cable channel and an auxiliary tray provided with a rim for holding a piece of electrical equipment, wherein the rim faces the main tray at a distance from the main tray. Legs extend from the auxiliary tray towards the main tray and are attached to attachment portions of the main tray in a releasable manner.

EP1775813 discloses a raceway for routing cabling with three parallel and coplanar channels, namely two side channels for routing power and communication cabling and a centre channel for positioning electrical equipment such as a power receptacle or communication module.

A surface raceway mounting bracket used to secure an electrical fixture to the surface raceway is described in US 6,664,467. The mounting bracket is supported by the surface raceway and it is configured with at least one latch extending from the back surface of the mounting bracket. Each such latch is configured to engage and latch onto the base component of the surface raceway. A perimeter portion of this mounting bracket is designed to overlay a portion of the cover of this surface raceway.

### SUMMARY OF THE INVENTION

The invention aims at simplifying the setup, maintenance or modification of an electrical installation comprising cables and electrical equipment in a vehicle body of a rail vehicle.

According to the invention, there is provided a cable tray assembly for installing one or more cable harnesses in a rail vehicle body, comprising a main tray having at least a first cable channel extending in a longitudinal direction of the cable tray assembly, characterised in that the cable tray assembly further comprises an auxiliary tray provided with an auxiliary tray plate for holding one or more pieces of electrical equipment, the auxiliary tray plate facing the main tray at a distance from the main tray and legs extending from the auxiliary tray plate towards the main tray, the legs being attached to attachment portions of the main tray in a releasable manner. Because the auxiliary tray for holding a piece of equipment is fixed to the main tray rather than to the vehicle body independently from the main tray, it is possible to preassemble all or part of the wiring in the cable tray assembly before the cable tray assembly is installed into the vehicle.

The assembly can be easily modified, e.g. to remove or replace the auxiliary tray. Preferably, releasable fixings are provided for attaching the legs to the attachment portions of the main tray in a releasable manner.

The first cable channel has a bottom and at least one side wall extending parallel to the longitudinal axis.

The main tray has a second cable channel at a distance from and parallel to the first cable channel. Having at least two channels enables to separate various bundles of cables, such as power cables and data cables, which is advantageous in terms of electromagnetic compatibility. The second cable channel has a bottom and at least one side wall extending parallel to the longitudinal axis.

The main tray has bridges connecting the first channel and second channel. The bridges are plastically deformable, so that the orientation of the two cable channels can be adapted to the needs. The bridges are bent, so that a flat bottom of the first channel and a flat bottom of the second channel are in different planes.

According to an embodiment, the main tray and/or the auxiliary tray are made of sheet metal, preferably aluminium. The sheet metal is preferably stamped to obtain the final shape of the main tray from an initially flat sheet.

According to an embodiment, the auxiliary tray plate is parallel to the longitudinal direction.

The cable tray assembly is used in combination with wiring and electrical equipment. In particular, it may comprise at least a first bundle of one or more electrical cables arranged in the first channel. It may also comprise at least a second bundle of one or more electrical cables arranged in the second channel. One of the first and second bundles may be a bundle of data cables and the other of the first and second bundles may be a bundle of power cable. The cable tray assembly may further comprise at least one piece of electrical equipment fixed to the auxiliary tray. The piece of electrical equipment is preferably connected to one or more cables of the first bundle of electrical cables.

To increase the modularity of the assembly, the main tray may comprise further attachment portions, such that the auxiliary tray can be released from the attachment portions and fixed to the further attachment portions. If necessary, it may also comprise a further auxiliary tray provided with a further auxiliary tray plate for holding a further piece of electrical equipment, the further auxiliary tray plate facing the main tray at a distance from the main tray, and further legs extending from the further auxiliary tray plate to the main tray, the further legs being attached to the further attachment portions of the main tray in a releasable manner. As the attachment portions and further attachment portions are standardised, the positions of auxiliary tray and further auxiliary tray can be switched.

According to another aspect of the invention, there is provided a rail vehicle body provided with the cable tray assembly as described hereinbefore, fixed to the rail vehicle body, preferably to a roof or ceiling of the rail vehicle body.

According to another aspect of the invention, there is provided a method of assembly of the cable tray assembly described hereinbefore into a vehicle body of a rail vehicle, which comprises a preassembly step of the cable tray assembly and a subsequent assembly step of the cable tray assembly into the vehicle body, wherein the preassembly step includes the following:
- cabling a main tray of the cable tray assembly with one or more cable harnesses,
- attaching an auxiliary tray to the main tray with releasable fixings,
- fixing at least one piece of electrical equipment to the auxiliary tray; and
- connecting the at least one piece of electrical equipment to at least one cable of the one or more cable harnesses.

According to another aspect of the invention, there is provided a method of assembly of a vehicle body of a rail vehicle, comprising assembling a cable tray assembly into a roof of the vehicle body according to the method described hereinbefore, further comprising a subsequent step of assembling the roof to a side wall of the vehicle body. In other words, the assembly of the cable tray assembly into the roof takes place before the roof is fixed to the side walls, in a position most appropriate for the workers, i.e. not necessarily from below. In particular, the roof can be placed upside down and the cable tray assembly fixed to a jig and lifted by a crane can be lowered into the roof. Alternatively, the roof can be placed in an upright position and the cable tray assembly mounted from the side.

### BRIEF DESCRIPTION OF THE FIGURES

Other advantages and features of the invention will then become more clearly apparent from the following description of a specific embodiment of the invention given as non-restrictive examples only and represented in the accompanying drawings in which:
- Figure 1 is a cross-section of a roof section of a rail vehicle equipped with a cable tray assembly according to an embodiment of the invention;
- Figure 2 is an isometric view of the cable tray assembly of Figure 1;
- Figure 3 is a detail of two cable tray assemblies placed end to end, showing two auxiliary trays of different shapes;
- Figure 4 shows the cable tray assemblies of Figure 3, equipped with pieces of electrical equipment.

Corresponding reference numerals refer to the same or corresponding parts in each of the figures.

### DETAILED DESCRIPTION OF PREFERRED EMBODIMENTS

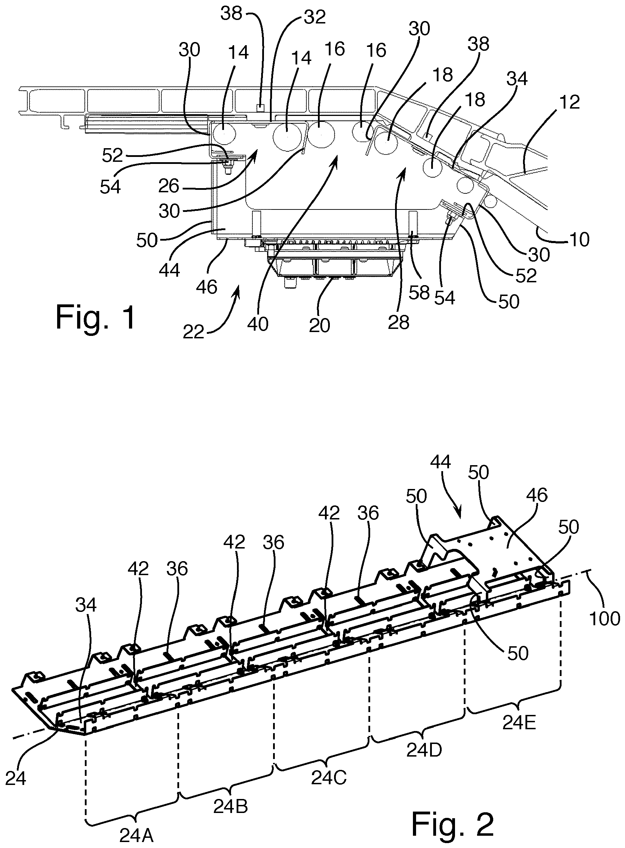

With reference to figure **1****,** the inner side **10** of a roof **12** of a vehicle body of a rail vehicle is equipped with bundles of cables **14, 16, 18** and pieces of electrical equipment **20,** which are component parts of a cable tray assembly **22.**

The cable tray assembly **22** includes a main tray **24** made of one piece of sheet metal, which can be subdivided in sections **24A, 24B, 24C, 24D, 24E** of substantially identical shape as shown in figure **2****.** The main tray **24** comprises two cable channels **26, 28** extending in a longitudinal direction **100** of the cable tray assembly **22** at a distance from one another. Each of the two channels **26, 28** is provided with side walls **30** and a substantially closed flat bottom **32, 34** provided with through holes or slots **36** at regular intervals for fixing the main tray to the structure of the roof with screws or bolts **38.** The interspace **40** between the two channels **26, 28** is crossed by bridges **42,** which connect the two channels **26, 28.** This interspace **40** may also be used as further cable channel with a substantially open bottom.

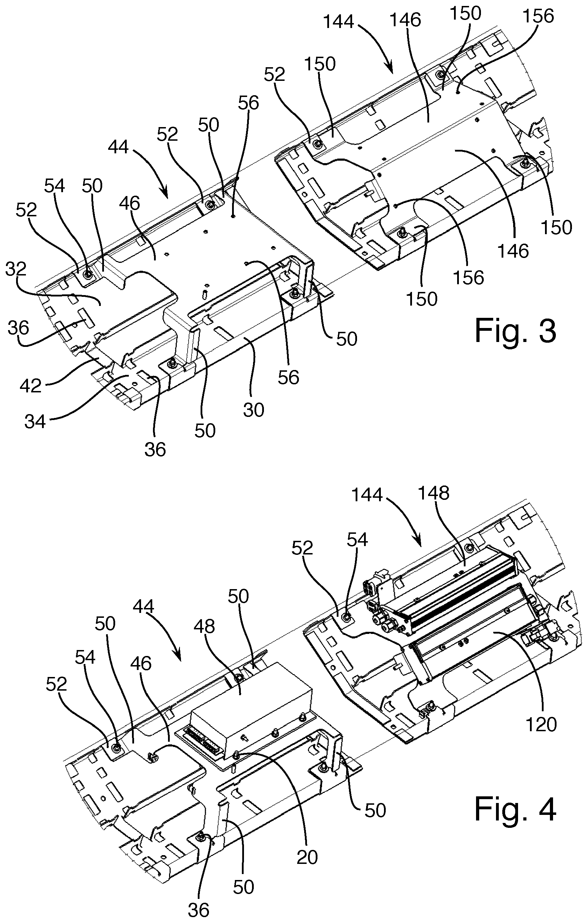

The cable tray assembly **22** further comprises one or more auxiliary trays **44, 144** each provided with an auxiliary tray plate **46, 146** for holding one or more pieces of electrical equipment **20, 120** and four legs **50, 150** that extend from the auxiliary tray plate **46, 146** to the main tray **24** and are attached to attachment portions **52** of the main tray **24** in a releasable manner by means of bolts or screws or other releasable fixings **54.** The auxiliary tray plate **46, 146** of each auxiliary tray faces the main tray **24** at a distance from the main tray. The auxiliary tray plate **46,** is substantially flat and parallel to the bottom **32** of the first cable channel **26.** The auxiliary tray plate **146** has two flat portions for accommodating two pieces of equipment **120.** The shape of each auxiliary tray **44, 144** is adapted to the piece or pieces of equipment **20, 120** it has to hold, as illustrated in figures **3** and **4****.** The auxiliary tray plates **46, 146** are provided with attachment portions **56, 156** such as holes to fix the pieces of electrical equipment **20, 120** with releasable fixings **58.** The pieces of electrical equipment **20, 120** that fit on the plate can be of any type, and include in particular electrical devices housed in housing of parallelepiped shape, having a longitudinal dimension of 10 to 30 cm or more.

Each auxiliary tray is preferably made in one piece from sheet metal.

As shown in figures **1****,** the cable tray assembly **22** in this embodiment is formed to fit into an interior corner of the roof structure **12,** and the bridges **42** of the main tray **24** are bent so that the bottom **32** of the first channel **26** and a bottom **34** of the second channel **28** are in different planes. In practice, the bending of the bridges **42** is obtained after the channels **26, 28** have been formed from a sheet of metal.

The distance between the first and second channels **26, 28** is useful to reduce electromagnetic interferences between cables **14, 18** in different channels, e.g. data cables in one channel and power cables in another channel.

The attachment portions **52** on the main tray for attaching the auxiliary trays **44, 144** are positioned at regular interval and define standard sets of four attachment portions **52,** which can be used for attaching further auxiliary trays or for moving one auxiliary tray **44, 144** from one location to another along the main tray **24.** In this respect, the cable tray assembly **22** is modular.

One advantage of this cable tray assembly **22** is that it can be wired and equipped with the necessary pieces of electrical equipment before it is mounted into the vehicle. The preassembly of the cable tray assembly **22** includes the following steps in any sequence:
- cabling the main tray **24** of the cable tray assembly **22** with one or more cable harnesses **14, 16, 18,**
- attaching the one or more auxiliary trays **44, 144** to the main tray **24** in a releasable manner,
- fixing at least one piece of electrical equipment **46, 146** to the one or more auxiliary trays **44, 146;**
- connecting the electrical equipment **44, 146** to at least one cable of the one or more cable harnesses **14, 16, 18.**

Advantageously, a jig can be used to lift the cable tray assembly and lower it into the roof placed upside down. Subsequently, the roof is fixed to the side walls of the vehicle body.

## Claims

1. A cable tray assembly (22) for installing one or more cable harnesses (14, 16, 18) in a rail vehicle body (12), comprising a main tray (24) having at least a first cable channel (26) extending in a longitudinal direction (100) of the cable tray (24) assembly and a second cable channel (28) at a distance from and parallel to the first cable channel (26), wherein the first cable channel (26) has a flat bottom (32) and at least one side wall (30) extending parallel to the longitudinal axis, the second cable channel (28) has a flat bottom (34) and at least one side wall (30) extending parallel to the longitudinal axis, and the cable tray assembly (22) further comprises an auxiliary tray (44, 144) provided with an auxiliary tray plate (46, 146) for holding one or more pieces of electrical equipment (20, 120), the auxiliary tray plate (46, 146) facing the main tray (24) at a distance from the main tray (24) and legs (50, 150) extending from the auxiliary tray plate (46, 146) towards the main tray (24), the legs (50, 150) being attached to attachment portions (52) of the main tray in a releasable manner, **characterised in that** the main tray (24) has plastically deformable bridges (42) connecting the first channel (26) and second channel (28), the bridges (42) being bent, so that the flat bottom (32) of the first channel (26) and the flat bottom (34) of the second channel (28) are in different planes.

2. The cable tray assembly of claim 1, comprising releasable fixings (54) for attaching the legs (50, 150) to the attachment portions (52) of the main tray (24) in a releasable manner.

3. The cable tray assembly of any one of the preceding claims, wherein the main tray (24) and/or the auxiliary tray (44, 144) are made of sheet metal.

4. The cable tray assembly of any one of the preceding claims, wherein the auxiliary tray plate (46, 146) is parallel to the longitudinal direction (100).

5. The cable tray assembly of any one of the preceding claims, further comprising at least a first bundle (14) of one or more electrical cables arranged in the first channel (26).

6. The cable tray assembly of claim 5, further comprising at least a second bundle (18) of one or more electrical cables arranged in the second channel (28).

7. The cable tray assembly of claim 6, wherein one of the first and second bundles (14, 18) is a bundle of data cables and the other of the first and second bundles (14, 18) is a bundle of power cables.

8. The cable tray assembly of any one of the preceding claims, further comprising at least one piece of electrical equipment (20, 120) fixed to the auxiliary tray (44, 144).

9. The cable tray assembly of claim 8 and any one of claims 5 to 7, wherein the piece of electrical equipment (20, 120) is connected to one or more cables of the first bundle (14) of electrical cables.

10. The cable tray assembly of any one of the preceding claims, wherein the main tray (24) comprises further attachment portions (52), such that the auxiliary tray (44, 144) can be released from the attachment portions (52) and fixed to the further attachment portions (52).

11. The cable tray assembly of claim 10, comprising a further auxiliary tray (144, 44) provided with a further auxiliary tray plate (146, 46) for holding a further piece of electrical equipment (120, 20), the further auxiliary tray plate (146, 46) facing the main tray (24) at a distance from the main tray (24), and further legs (150, 50) extending from the further auxiliary tray plate (146, 46) to the main tray (24), the further legs (146, 46) being attached to the further attachment portions (52) of the main tray (24) in a releasable manner.

12. A rail vehicle body provided with the cable tray assembly of any one of the preceding claims, fixed to the rail vehicle body, preferably to a roof or ceiling of the rail vehicle body.

13. The rail vehicle body of claim 12, wherein the cable tray assembly fits into an interior corner of a roof structure (12) of the rail vehicle body.

14. A method of assembly of the cable tray assembly (22) of any one of the preceding claims into a vehicle body (12) of a rail vehicle, **characterised in that** it comprises a preassembly step of the cable tray assembly (22) and a subsequent assembly step of the cable tray assembly (22) into the vehicle body (12), wherein the preassembly step includes the following:
- cabling a main tray (24) of the cable tray assembly (22) with one or more cable harnesses (14, 16, 18),
- attaching an auxiliary tray (46, 146) to the main tray (24) with releasable fixings (54),
- fixing at least one piece of electrical equipment (20, 120) to the auxiliary tray (44, 144);
- connecting the at least one piece of electrical equipment (20, 120) to at least one cable of the one or more cable harnesses (14, 16, 18).

15. A method of assembly of a vehicle body of a rail vehicle, comprising assembling a cable tray assembly (24) into a roof (12) of the vehicle body according to the method of claim 14, further comprising a subsequent step of assembling the roof (12) to a side wall of the vehicle body.

## Patentansprüche

1. Kabelträgermontage (22) zum Installieren eines oder mehrerer Kabelbäume (14, 16, 18) in einer Schienenfahrzeugkarosserie (12), umfassend einen Hauptträger (24), der mindestens einen ersten Kabelkanal (26), der sich in einer Längsrichtung (100) der Kabelträgermontage (24) erstreckt, und einen zweiten Kabelkanal (28) aufweist, der in einem Abstand von und parallel zu dem ersten Kabelkanal (26) ist, wobei der erste Kabelkanal (26) einen flachen Boden (32) und mindestens eine Seitenwand (30) aufweist, die sich parallel zu der Längsachse erstrecken, der zweite Kabelkanal (28) einen flachen Boden (34) und mindestens eine Seitenwand (30) aufweist, die sich parallel zu der Längsachse erstrecken, und die Kabelträgermontage (22) ferner einen Hilfsträger (44, 144), der mit einer Hilfsträgerplatte (46, 146) zum Halten eines oder mehrerer Teile elektrischer Ausrüstung (20, 120) versehen ist, wobei die Hilfsträgerplatte (46, 146) dem Hauptträger (24) in einem Abstand von dem Hauptträger (24) zugewandt ist, und Schenkel (50, 150) umfasst, die sich von der Hilfsträgerplatte (46, 146) zu dem Hauptträger (24) hin erstrecken, wobei die Schenkel (50, 150) an Anbringungsabschnitten (52) des Hauptträgers auf eine lösbare Weise angebracht sind, **dadurch gekennzeichnet, dass** der Hauptträger (24) plastisch verformbare Brücken (42) aufweist, die den ersten Kanal (26) und den zweiten Kanal (28) verbinden, wobei die Brücken (42) so gebogen sind, dass der flache Boden (32) des ersten Kanals (26) und der flache Boden (34) des zweiten Kanals (28) in unterschiedlichen Ebenen liegen.

2. Kabelträgermontage nach Anspruch 1, umfassend lösbare Befestigungen (54) zum Anbringen der Schenkel (50, 150) an den Anbringungsabschnitten (52) des Hauptträgers (24) auf eine lösbare Weise.

3. Kabelträgermontage nach einem der vorstehenden Ansprüche, wobei der Hauptträger (24) und/oder der Hilfsträger (44, 144) aus Blech hergestellt sind.

4. Kabelträgermontage nach einem der vorstehenden Ansprüche, wobei die Hilfsträgerplatte (46, 146) parallel zu der Längsrichtung (100) ist.

5. Kabelträgermontage nach einem der vorstehenden Ansprüche, ferner umfassend mindestens ein erstes Bündel (14) aus einem oder mehreren Elektrokabeln, die in dem ersten Kanal (26) eingerichtet sind.

6. Kabelträgermontage nach Anspruch 5, ferner umfassend mindestens ein zweites Bündel (18) aus einem oder mehreren Elektrokabeln, die in dem zweiten Kanal (28) eingerichtet sind.

7. Kabelträgermontage nach Anspruch 6, wobei eines des ersten und des zweiten Bündels (14, 18) ein Bündel aus Datenkabeln ist und das andere des ersten und des zweiten Bündels (14, 18) ein Bündel aus Stromkabeln ist.

8. Kabelträgermontage nach einem der vorstehenden Ansprüche, ferner umfassend mindestens einen Teil elektrischer Ausrüstung (20, 120), der an dem Hilfsträger (44, 144) befestigt ist.

9. Kabelträgermontage nach Anspruch 8 und einem der Ansprüche 5 bis 7, wobei der Teil elektrischer Ausrüstung (20, 120) mit einem oder mehreren Kabeln des ersten Bündels (14) Elektrokabeln verbunden ist.

10. Kabelträgermontage nach einem der vorstehenden Ansprüche, wobei der Hauptträger (24) weitere Anbringungsabschnitte (52) derart umfasst, dass der Hilfsträger (44, 144) von den Anbringungsabschnitten (52) gelöst und an den weiteren Anbringungsabschnitten (52) befestigt werden kann.

11. Kabelträgermontage nach Anspruch 10, umfassend einen weiteren Hilfsträger (144, 44), der mit einer weiteren Hilfsträgerplatte (146, 46) zum Halten eines weiteren Teils elektrischer Ausrüstung (120, 20) versehen ist, wobei die weitere Hilfsträgerplatte (146, 46) dem Hauptträger (24) in einem Abstand von dem Hauptträger (24) zugewandt ist und sich weitere Schenkel (150, 50) von der weiteren Hilfsträgerplatte (146, 46) zu dem Hauptträger (24) erstrecken, wobei die weiteren Schenkel (146, 46) an den weiteren Anbringungsabschnitten (52) des Hauptträgers (24) auf eine lösbare Weise angebracht sind.

12. Schienenfahrzeugkarosserie, der mit der Kabelträgermontage nach einem der vorstehenden Ansprüche versehen ist, die an der Schienenfahrzeugkarosserie, vorzugsweise an einem Dach oder einer Decke der Schienenfahrzeugkarosserie, befestigt ist.

13. Schienenfahrzeugkarosserie nach Anspruch 12, wobei die Kabelträgermontage in eine Innenecke einer Dachkonstruktion (12) der Schienenfahrzeugkarosserie passt.

14. Verfahren für eine Montage der Kabelträgermontage (22) nach einem der vorstehenden Ansprüche in eine Fahrzeugkarosserie (12) eines Schienenfahrzeugs, **dadurch gekennzeichnet, dass** es einen Vormontageschritt der Kabelträgermontage (22) und einen nachfolgenden Montageschritt der Kabelträgermontage (22) in die Fahrzeugkarosserie (12) umfasst, wobei der Vormontageschritt das Folgende einschließt:
- Verkabeln eines Hauptträgers (24) der Kabelträgermontage (22) mit einem oder mehreren Kabelbäumen (14, 16, 18),
- Anbringen eines Hilfsträgers (46, 146) an dem Hauptträger (24) mit lösbaren Befestigungen (54),
- Befestigen von mindestens einem Teil elektrischer Ausrüstung (20, 120) an den Hilfsträger (44, 144);
- Verbinden des mindestens einen Teils elektrischer Ausrüstung (20, 120) mit mindestens einem Kabel des einen oder der mehreren Kabelbäume (14, 16, 18).

15. Verfahren für die Montage einer Fahrzeugkarosserie eines Schienenfahrzeugs, umfassend das Montieren einer Kabelträgermontage (24) in ein Dach (12) der Fahrzeugkarosserie nach dem Verfahren von Anspruch 14, ferner umfassend einen nachfolgenden Schritt des Montierens des Dachs (12) an einer Seitenwand der Fahrzeugkarosserie.

## Revendications

1. Ensemble chemin de câbles (22) pour l'installation d'un ou plusieurs faisceaux de câbles (14, 16, 18) dans une caisse de véhicule ferroviaire (12), comprenant un chemin principal (24) ayant au moins une première goulotte de câbles (26) s'étendant dans une direction longitudinale (100) de l'ensemble chemin de câbles (24) et une seconde goulotte de câbles (28) à une certaine distance de, et parallèle à, la première goulotte de câbles (26), dans lequel la première goulotte de câbles (26) a un fond plat (32) et au moins une paroi latérale (30) s'étendant parallèlement à l'axe longitudinal, la seconde goulotte de câbles (28) a un fond plat (34) et au moins une paroi latérale (30) s'étendant parallèlement à l'axe longitudinal, et l'ensemble chemin de câbles (22) comprend en outre un chemin auxiliaire (44, 144) pourvu d'une plaque de chemin auxiliaire (46, 146) pour contenir un ou plusieurs équipements électriques (20, 120), la plaque de chemin auxiliaire (46, 146) faisant face au chemin principal (24) à une certaine distance du chemin principal (24) et des pattes (50, 150) s'étendant de la plaque de chemin auxiliaire (46, 146) vers le chemin principal (24), les pattes (50, 150) étant fixées aux parties de fixation (52) du chemin principal de manière amovible, **caractérisées en ce que** le chemin principal (24) comporte des ponts (42) plastiquement déformables reliant la première goulotte (26) et la seconde goulotte (28), les ponts (42) étant pliés de manière à ce que le fond plat (32) de la première goulotte (26) et le fond plat (34) de la seconde goulotte (28) se trouvent dans des plans différents.

2. Ensemble chemin de câbles selon la revendication 1, comprenant des fixations amovibles (54) pour fixer les pattes (50, 150) aux parties de fixation (52) du chemin principal (24) de manière amovible.

3. Ensemble chemin de câbles selon l'une quelconque des revendications précédentes, dans lequel le chemin principal (24) et/ou le chemin auxiliaire (44, 144) sont en tôle.

4. Ensemble chemin de câbles selon l'une quelconque des revendications précédentes, dans lequel la plaque de chemin auxiliaire (46, 146) est parallèle à la direction longitudinale (100).

5. Ensemble chemin de câbles selon l'une quelconque des revendications précédentes, comprend en outre au moins un premier groupe (14) d'un ou plusieurs câbles électriques disposés dans le premier canal (26).

6. Ensemble chemin de câbles selon la revendication 5, comprenant en outre au moins un second groupe (18) d'un ou plusieurs câbles électriques disposés dans la seconde goulotte (28).

7. Ensemble chemin de câbles selon la revendication 6, dans lequel l'un des premiers et seconds groupes (14, 18) est un groupe de câbles de données et l'autre des premiers et seconds groupes (14, 18) est un groupe de câbles d'alimentation.

8. Ensemble chemin de câbles selon l'une quelconque des revendications précédentes, comprenant en outre au moins un équipement électrique (20, 120) fixé au chemin auxiliaire (44, 144).

9. Ensemble chemin de câbles selon la revendication 8 et selon l'une quelconque des revendications 5 à 7, dans lequel l'équipement électrique (20, 120) est connecté à un ou plusieurs câbles du premier groupe (14) de câbles électriques.

10. Ensemble chemin de câbles selon l'une quelconque des revendications précédentes, dans lequel le chemin principal (24) comprend d'autres parties de fixation (52), de sorte que le chemin auxiliaire (44, 144) peut être libéré des parties de fixation (52) et fixé aux autres parties de fixation (52).

11. Ensemble chemin de câbles selon la revendication 10, comprenant un autre chemin auxiliaire (144, 44) muni d'une autre plaque de chemin auxiliaire (146, 46) pour tenir un autre élément d'équipement électrique (120, 20), l'autre plaque de chemin auxiliaire (146, 46) faisant face au chemin principal (24) à une certaine distance du chemin principal (24), et d'autres pattes (150, 50) s'étendant de l'autre plaque de chemin auxiliaire (146, 46) au chemin principal (24), les autres pattes (146, 46) étant fixées aux autres parties de fixation (52) du chemin principal (24) de manière amovible.

12. Caisse de véhicule ferroviaire équipée de l'ensemble chemin de câbles selon l'une quelconque des revendications précédentes, fixé à la caisse du véhicule ferroviaire, de préférence au toit ou au plafond de la caisse du véhicule ferroviaire.

13. Caisse de véhicule ferroviaire selon la revendication 12, dans laquelle l'ensemble chemin de câbles s'insère dans un coin intérieur d'une structure de toit (12) de la caisse de véhicule ferroviaire.

14. Procédé d'assemblage de l'ensemble chemin de câbles (22) selon l'une quelconque des revendications précédentes dans une caisse de véhicule (12) d'un véhicule ferroviaire, **caractérisé en ce qu'**il comprend une étape de préassemblage de l'ensemble chemin de câbles (22) et une étape ultérieure d'assemblage de l'ensemble chemin de câbles (22) dans la caisse de véhicule (12), dans lequel l'étape de préassemblage comprend ce qui suit :
- le câblage d'un chemin principal (24) de l'ensemble chemin de câbles (22) avec un ou plusieurs faisceaux de câbles (14, 16, 18),
- la fixation d'un chemin auxiliaire (46, 146) au chemin principal (24) à l'aide de fixations amovibles (54),
- la fixation d'au moins un élément d'équipement électrique (20, 120) sur le chemin auxiliaire (44, 144) ;
- la connexion d'au moins un élément d'équipement électrique (20, 120) à au moins un câble d'un ou plusieurs faisceaux de câbles (14, 16, 18).

15. Procédé d'assemblage d'une caisse de véhicule ferroviaire, comprenant l'assemblage d'un ensemble chemin de câbles (24) dans un toit (12) de la caisse du véhicule en fonction du procédé selon la revendication 14, comprenant en outre une étape ultérieure d'assemblage du toit (12) à une paroi latérale de la caisse du véhicule.
